(19) Europäisches Patentamt
European Patent Office
Office européen des brevets

(11) **EP 4 428 169 A1**

(12) **EUROPEAN PATENT APPLICATION**

(43) Date of publication:
**11.09.2024 Bulletin 2024/37**

(21) Application number: **23161036.1**

(22) Date of filing: **09.03.2023**

(51) International Patent Classification (IPC):
*C08G 18/08* (2006.01)     *C08G 18/10* (2006.01)
*C08G 18/32* (2006.01)     *C08G 18/40* (2006.01)
*C08G 18/48* (2006.01)     *C08G 18/76* (2006.01)
*C09J 175/04* (2006.01)     *C09J 175/08* (2006.01)
*C09J 175/12* (2006.01)

(52) Cooperative Patent Classification (CPC):
(C-Sets available)
C08G 18/0857; C08G 18/10; C08G 18/3231;
C08G 18/409; C08G 18/4829; C08G 18/7664;
C08G 18/7671; C09J 175/04; C09J 175/08;
C09J 175/12                          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Covestro Deutschland AG**
**51373 Leverkusen (DE)**

(72) Inventors:
• **Karafilidis, Christos**
  **51375 Leverkusen (DE)**

• **Browne, Edward**
  **50672 Köln (DE)**
• **Werth, Kathrin**
  **40225 Düsseldorf (DE)**
• **Adkins, Rick**
  **Canonsburg, 15317 (US)**

(74) Representative: **Levpat**
**c/o Covestro AG**
**Gebäude K12**
**51365 Leverkusen (DE)**

(54) **PROCESS FOR PREPARING STORAGE-STABLE ISOCYANATE-TERMINATED PREPOLYMERS WITH LONG PROCESSING LIFE**

(57)    The present invention relates to a process for preparing an isocyanate-terminated prepolymer, particularly for use as or in adhesive(s), using a specific organic polyhydroxyl compound in the form of a dispersion (component b)), and to the isocyanate-terminated prepolymer obtainable by this process. The invention further relates to the use of the isocyanate-terminated prepolymer as or in adhesive(s), especially wood adhesive(s), and to a composite element composed of at least two wooden parts joined to one another using the isocyanate-terminated prepolymer as or in an adhesive. The invention finally relates to the use of the specific organic polyhydroxyl compound in the form of a dispersion as a component in the preparation of isocyanate-terminated prepolymers, for increasing their storage stability and/or extending their film-forming time.

EP 4 428 169 A1

**(Cont. next page)**

(52) Cooperative Patent Classification (CPC): (Cont.)

C-Sets
**C08G 18/10, C08G 18/307**

**Description**

The present invention relates to a process for preparing an isocyanate-terminated prepolymer, particularly for use as or in adhesive(s), using a specific organic polyhydroxyl compound in the form of a dispersion (component b)), and to the isocyanate-terminated prepolymer obtainable by this process. The invention further relates to the use of the isocyanate-terminated prepolymer and to a composite element composed of at least two wooden parts joined to one another using the isocyanate-terminated prepolymer as or in an adhesive. The invention finally relates to the use of the specific organic polyhydroxyl compound in the form of a dispersion as a component in the preparation of isocyanate-terminated prepolymers, for increasing their storage stability and/or extending their film-forming time.

Adhesives based on phenol- and/or resorcinol- or melamine-formaldehyde condensates are known and are used for the bonding of wood, especially for heavy-duty, long-lasting wooden structures (e.g. EP-A 0 879 270). The reaction of the aqueous curative mixture with the melamine resin is a polycondensation during which polymer construction is accompanied by release of water. A reproducible course of the reaction therefore necessitates compliance with strict criteria regarding the water content of the wood.

For heavy-duty wooden structures, such as load-bearing components, stringent requirements are imposed on the components' mechanical strength. For example, the bond strength is to be high enough even after many years accompanied by weathering effects.

The general utility of adhesives is established through compliance with standards, as for example DIN EN 204, durability group D4 or WATT 91 (Wood Adhesives Temperature Test).

The bonding of wood with polyurethane adhesives in the form both of one-component and two-component systems is a time-honoured practice and is described in the journal "Adhäsion - kleben & dichten", 41, 1-2/97, pp. 37-38 (1997). One-component systems are especially suitable for wood substrates as the wood's natural moisture content ensures sufficient availability of water as a co-reactant. This removes the need to fine-tune the water content or, as is common with many water-impervious substrates, to treat the substrate surfaces with a water mist so as to ensure complete reaction.

A disadvantage affecting one- and two-component systems alike, however, when using low-viscosity polyisocyanates, is the migration of the latter into the wood during the pressing procedure. While this does result in an effective bond between adhesive and wood, excessive migration is accompanied by an uncontrolled shift in the NCO/OH ratio that is important for polymer construction. As a consequence, the adhesive in the bondline becomes depleted of polyisocyanate and in extremis the resulting bonds may be defective.

To ensure sufficient concentration of adhesive in the bondline it is possible to use higher-viscosity systems, but these may cause problems during application. Another possibility is to add fillers. Organic fillers are examples of suitable fillers; mineral fillers are less suitable, as they readily develop sediment and if conveyed mechanically can raise the levels of abrasion in the complicated pumping and metering systems.

Examples of useful organic fillers may include wood flour and not only cellulosic fibres but also plastic fibres. Plastic fibres in the form of short microfibres also act as a thixotropic additive. Particularly suitable fillers are dispersions, prepared in situ, of polyureas and/or polyhydrazodicarbonamides in hydroxyl-containing polyethers, which are extensively used in producing polyurethane foams featuring enhanced compression strength (e.g. DE-A 25 13 815).

For flexible bonds with excellent cohesive strength use is made, as for example in DE-A 27 19 720, of both one-component and two-component polyurethane adhesives based on organic polyisocyanates and dispersions of polymers in organic hydroxyl compounds.

A disadvantage of bonded wooden structures is the adhesive's susceptibility to moisture, causing weakening of the adhesive layer and so limiting the use of bonded wooden structures in sustained-moisture environments. The result is that in the dry state it is often possible to find extensive adherend failure in the wood, whereas on prolonged water storage or in a boiling test the failure mode observed is cohesive.

To overcome this disadvantage, EP 1 343 832 B1 proposes a wood adhesive comprising an isocyanate-terminated prepolymer, which makes a positive contribution to the wet strength or water resistance of wood.

A disadvantage, though, of isocyanate-terminated prepolymers as adhesives or constituents thereof is that their reactive isocyanate groups render them subject, after storage, to changes in viscosity, with an accompanying reduction in the isocyanate content of the prepolymers. It is additionally desirable that the isocyanate-terminated prepolymers have a relatively long processing life.

The object of the present invention was therefore to provide isocyanate-terminated prepolymers, particularly for use as or in adhesive(s), that feature improved storage stability and preferably a longer processing life to boot.

These objects have been achieved by a process for preparing an isocyanate-terminated prepolymer, particularly for use as or in adhesive(s), having an isocyanate content of 8.0 to 20.0 wt%, determined to DIN EN 1242:2013-05, by reacting a composition comprising or consisting of components

> a) at least one organic polyisocyanate;

b) at least one organic polyhydroxyl compound in the form of a dispersion which comprises or consists of reaction products of

i) at least one organic polyisocyanate with

ii) at least one polyamine containing primary and/or secondary amino groups, hydrazine and/or hydrazide in a

iii) polyether containing at least two hydroxyl groups and having a molecular weight range from 500 to 12 000 g/mol;

and also

c) optionally auxiliaries and adjuvants,

wherein the process is characterized in that component b) has a pH of ≥ 8.0, determined via DIN EN ISO 19396-1:2020-05, a water content of ≤ 0.20 wt%, based on the total weight of component b) and determined via DIN 51777:2020-04, and a total base content of ≥ 200 ppm, determined via the method set out later on below.

The invention further relates to an isocyanate-terminated prepolymer obtained or obtainable by the process of the invention.

The invention also relates to the use of the isocyanate-terminated prepolymer of the invention as or in adhesive(s), especially wood adhesive(s).

The invention additionally relates to a composite element composed of at least two wooden parts joined to one another using an isocyanate-terminated prepolymer of the invention as or in an adhesive.

The invention finally relates to the use of an organic polyhydroxyl compound of the invention in the form of a dispersion in the preparation of isocyanate-terminated prepolymers, especially of isocyanate-terminated prepolymers of the invention, for increasing the storage stability and/or extending the film-forming time of these isocyanate-terminated prepolymers.

Surprisingly it has been found that the use of an organic polyhydroxyl compound in the form of a dispersion (component b)) which has a pH of ≥ 8.0, a water content of ≤ 0.20 wt% and a total base content of ≥ 200 ppm leads to an improvement in the storage stability and a prolongation of the processing life.

The pH of component b) is determined via DIN EN ISO 19396-1:2020-05. This was done by diluting 5 g of the sample in 100 ml of a methanol/water mixture at 1:1 parts by weight. The methanol/water solvent mixture was adjusted beforehand to a pH of 7. Component b) has a pH preferably of ≥ 8.0 to ≤ 10.0, more preferably of ≥ 8.2 to ≤ 9.8, very preferably of ≥ 8.2 to ≤ 9.6.

The water content of component b) is determined via DIN 51777:2020-04. Component b) preferably has a water content of ≥ 0.01 to ≤ 0.25 wt%, preferably of ≥ 0.02 to ≤ 0.20 wt%, more preferably of ≥ 0.05 to ≤ 0.18 wt%.

The total base content is ascertained as follows: A 250 ml flask is charged accurately with 30 g of the sample and 100 ml of acetic acid. If the anticipated total base content is more than 300 mg KOH/kg, titration is performed with standard perchloric acid solution c1 (standard perchloric acid solution in acetic acid, c1(HClO4) = 0.1 mol/l with titre t); if less, with standard perchloric acid solution c2 (standard perchloric acid solution in acetic acid, c2(HClO4) = 0.01 mol/l with titre t). A pH meter determines the equivalence point during the titration via the potential difference and so determines the volume V of standard solution consumed. The total base content R is determined via the formula below:

$$R = ((V-V0)*56.1*c(HClO4)*t*1000)/w$$

V0: Volume of standard solution consumed for titration of the blank value, in l

56.1: Molar mass of KOH in g/mol

c(HClO4) : nominal amount-of-substance concentration of the standard solution, in mol/l

t: Titre of the standard solution

1000: Conversion factor for g to kg

w: Initial mass of sample in g

The total base content of component b) is preferably from ≥ 250 ppm to ≤ 500 ppm, more preferably from ≥ 300 ppm to ≤ 450 ppm.

The storage stability metric used for the purposes of this invention is the viscosity change and/or reduction in the isocyanate content. In this case the isocyanate-terminated prepolymer is stored over a period of 3 days at 80°C in an aluminium canister under dry nitrogen, the samples being analysed for viscosity change and/or isocyanate content before and after storage. The viscosity change is determined via a rheometer at 25°C to DIN 53019:2008-09, the reduction in the isocyanate content to DIN EN 1242:2013-05. The isocyanate-terminated prepolymers of the invention preferably have such a viscosity change of at most 3000 mPas, more preferably of at most 2000 mPas, more preferably still of 100 to 1000 mPas, very preferably of at most 500 mPas, and/or such a reduction in isocyanate content of at most 0.5 wt%, more preferably of 0.1 wt% to 0.4 wt%.

For preparing the isocyanate-terminated prepolymer, particularly the isocyanate-terminated prepolymer for use as or in adhesive(s), a composition comprising or consisting of components

> a) at least one organic polyisocyanate;

> b) at least one organic polyhydroxyl compound in the form of a dispersion which comprises or consists of reaction products of

>> i) at least one organic polyisocyanate with

>> ii) at least one polyamine containing primary and/or secondary amino groups, hydrazine and/or hydrazide in a

>> iii) polyether containing at least two hydroxyl groups and having a molecular weight range from 500 to 12 000 g/mol;

> and also

> c) optionally auxiliaries and adjuvants,

is reacted.

This composition comprises preferably

- 25.0 to 80.0 wt%, preferably 35.0 to 70.0 wt% of component a);

- 20.0 to 75.0 wt%, preferably 25.0 to 65.0 wt% of component b); and

- 0 to 5.0 wt%, preferably 0.05 to 2.0 wt% of component c);

based on 100 wt% arising from the sum total of components a) to c).

Component a) comprises or consists of at least one organic polyisocyanate. The organic polyisocyanate of component a) is preferably selected from the group comprising or consisting of aliphatic, cycloaliphatic, aromatic and heterocyclic polyisocyanates or mixtures thereof, especially 2,4-diisocyanatotoluene, 2,6-diisocyanatotoluene, 2,2'-diisocyanatodiphenylmethane, 2,4'-diisocyanatodiphenylmethane, 4,4'-diisocyanatodiphenylmethane and poly(methylenephenyl isocyanate) (pMDI) or mixtures thereof.

Component b) comprises or consists of at least one organic polyhydroxyl compound in the form of a dispersion which comprises or consists of reaction products of

> i) at least one organic polyisocyanate with

> ii) at least one polyamine containing primary and/or secondary amino groups, hydrazine and/or hydrazide in a

> iii) polyether containing at least two hydroxyl groups and having a molecular weight range from 500 to 12 000 g/mol.

Furthermore, component b) has a pH of ≥ 8.0, preferably of ≥ 8.0 to ≤ 10.0, more preferably 8.2 to ≤ 9.8, very preferably 8.2 to ≤ 9.6, determined via DIN EN ISO 19396-1:2020-05; a water content of ≤ 0.20 wt%, preferably 0.01 to ≤ 0.25 wt%, more preferably of ≥ 0.02 to ≤ 0.20 wt%, very preferably of ≥ 0.05 to ≤ 0.18 wt%, based on the total weight of component b) and determined via DIN 51777:2020-04; and a total base content of ≥ 200 ppm, preferably 250 ppm to ≤ 500 ppm, more preferably 300 ppm to ≤ 450 ppm, determined via the method set out earlier on above.

Preferably, moreover, component b) before the reaction is dried under reduced pressure at elevated temperatures, preferably for 2 to 4 hours at 100 to 150 °C and 5 to 50 mbar. Very preferably, component b) is dried for 3 hours at 120°C and 5 mbar in an oil pump vacuum with stirring. Through the reduced-pressure drying at elevated temperatures it is possible to adjust the invention-compliant pH, the water content and also the total base content.

It is further preferable for component b) to have a solids content of 2.0 to 40.0 wt%, preferably of 5.0 to 40.0 wt%, more preferably of 10 to 25 wt%.

The at least one organic polyisocyanate i) is preferably selected from the group comprising or consisting of hexamethylene 1,6-diisocyanate, pentamethylene 1,5-diisocyanate, 2,4-diisocyanatotoluene, 2,6-diisocyanatotoluene, 3,3,5-trimethyl-5-isocyanatomethylcyclohexyl isocyanate, diphenylmethane 2,2'-diisocyanate, diphenylmethane 2,4'-diisocyanate, diphenylmethane 4,4'-diisocyanate or mixtures thereof, more preferably 2,4-diisocyanatotoluene, 2,6-diisocyanatotoluene or mixtures thereof, more preferably still a mixture of 2,4-diisocyanatotoluene and 2,6-diisocyanatotoluene in a ratio of 80:20.

Furthermore, it is preferable that

- the polyamine containing primary and/or secondary amino groups of component ii) is selected from the group comprising or consisting of aliphatic, araliphatic, cycloaliphatic or aromatic amines and also mixtures thereof, especially ethylenediamine, hexamethylenediamines, trimethyldiaminohexanes, N,N'-dimethyleneethylenediamine, diethylenetriamine, propylenediamine, dipropylenetriamine, piperazine, triazine, 4-aminobenzylamine, 4,4'-diaminodicyclohexylmethane, 1,4-diaminocyclohexane, phenylenediamines, toluenediamines, bisaminomethylbenzenes or mixtures thereof;

- the hydrazine of component ii) is selected from the group comprising or consisting of hydrazine hydrate and N,N-dialkylhydrazines or mixtures thereof; and/or

- the hydrazide of component ii) is selected from the group comprising or consisting of hydrazides of monocarboxylic acids, hydrazides of metals or mixtures thereof.

The polyether iii) containing at least two hydroxyl groups and having a molecular weight range from 500 to 12 000 g/mol is preferably selected from the group comprising or consisting of products of polyaddition of propylene oxide and/or ethylene oxide onto bi- and/or tri-functional starters, where the starter preferably comprises or consists of water, 1,2-propylene glycol, trimethylolpropane, glycerol, pentaerythritol or mixtures thereof.

With further preference the polyether iii) comprises or consists of a polyalkoxyalkylene-polyol, where this polyalkoxyalkylene-polyol preferably comprises or consists of a polyoxypropylene-polyoxyethylene-polyol which preferably has an ethoxyethylene group content of 0 to 30.0 wt%, more preferably of 5.0 to 25.0 wt% and/or a hydroxyl number of 20 to 56 mg KOH/g.

It is preferable for the reaction products contained in component b) to comprise or consist of a polyurea and/or a polyhydrazodicarbonamide in a fraction of preferably 2.0 to 25.0 wt%, more preferably 5.0 to 23.0 wt%, based on the mass of the isocyanate-terminated prepolymer.

In one embodiment component b) comprises reaction products of 16.9 parts by weight of a mixture of 2,4- and 2,6-diisocyanatotoluene i) in a ratio of 80:20 with 4.85 parts by weight of hydrazine hydrate ii) in 80 parts by weight of a polyether iii) having a functionality greater than 2, with the polyether iii) preferably being or comprising a polyalkoxyalkylene polyol.

The use of the organic polyhydroxyl compound of the invention in the form of a dispersion (that is, the component b) of the invention) as a component in the preparation of isocyanate-terminated prepolymers, especially of the prepolymers of the invention, leads to the increase in the storage stability and/or prolongation of the film-forming time of these isocyanate-terminated prepolymers. The present invention thus also relates to the use of the organic polyhydroxyl compound of the invention in the form of a dispersion as a component (component b) of the invention) in the preparation of isocyanate-terminated prepolymers, especially of isocyanate-terminated prepolymers of the invention, for increasing the storage stability and/or extending the film-forming time of these isocyanate-terminated prepolymers.

The isocyanate-terminated prepolymer of the invention has an isocyanate content of 8.0 wt% to 20.0 wt%, preferably of 10.0 to 20.0 wt%, more preferably of 12.0 to 18.0 wt%, determined to DIN EN 1242:2013-05.

The isocyanate-terminated prepolymer of the invention preferably has a dynamic viscosity of $\geq 1000$ to $\leq 5000$ mPas, more preferably 1000 to $\leq 4000$ mPas, very preferably 1000 to $\leq 3000$ mPas, determined via a rheometer to DIN 53019:2008-09.

The isocyanate-terminated prepolymer of the invention is obtained or is obtainable by the process of the invention.

The isocyanate-terminated prepolymer after storage over a period of 3 days at 80°C under dry nitrogen preferably exhibits

- a viscosity change of at most 3000 mPas, preferably of at most 2000 mPas, more preferably of 100 mPas to 1000 mPas, very preferably of at most 500 mPas, determined via a rheometer at 25 °C to DIN 53019:2009-09; and/or

- a reduction in isocyanate content of at most 0.5 wt%, preferably of 0.1 wt% to 0.4 wt%, based on the total weight of the isocyanate-terminated prepolymer and determined to DIN EN 1242:2013-05.

With further preference the isocyanate-terminated prepolymer has a film-forming time of > 120 min, preferably 130 min to ≤ 240 min, determined via drying time recorder to ASTM D 5895:2003-05 at a prepolymer layer thickness of 150 μm at 24°C and 45% relative humidity.

The isocyanate-terminated prepolymer of the invention can be used as or in adhesive(s), especially wood adhesive(s). Accordingly the isocyanate-terminated prepolymer can be used as or in an adhesive for joining composite elements composed of at least two wooden parts. The invention consequently also relates to a composite element composed of at least two wooden parts joined to one another using the isocyanate-terminated prepolymer of the invention as or in an adhesive.

The present invention especially relates to the following embodiments:

In a first embodiment the invention relates to a process for preparing an isocyanate-terminated prepolymer, particularly for use as or in adhesives, having an isocyanate content of 8.0 to 20.0 wt%, determined to DIN EN 1242:2013-05, by reacting a composition comprising or consisting of components

a) at least one organic polyisocyanate;

b) at least one organic polyhydroxyl compound in the form of a dispersion which comprises or consists of reaction products of

   i) at least one organic polyisocyanate with

   ii) at least one polyamine containing primary and/or secondary amino groups, hydrazine and/or hydrazide in a

   iii) polyether containing at least two hydroxyl groups and having a molecular weight range from 500 to 12 000 g/mol;

and also

c) optionally auxiliaries and adjuvants,

characterized in that component b) has a pH of ≥ 8.0, determined via DIN EN ISO 19396-1:2020-05, a water content of ≤ 0.20 wt%, based on the total weight of component b) and determined via DIN 51777:2020-04, and a total base content of ≥ 200 ppm, determined via the method set out in the description.

In a second embodiment the invention relates to a process according to embodiment 1, characterized in that the isocyanate-terminated prepolymer has a dynamic viscosity of ≥ 1000 to ≤ 5000 mPas, preferably of ≥ 1000 to ≤ 4000 mPas, more preferably of ≥ 1000 to ≤ 3000 mPas, determined via a rheometer to DIN 53019:2008-09 and/or an isocyanate content of 8 wt% to 20 wt%, preferably of 10 to 18 wt%, more preferably of 12 to 18 wt%, determined via DIN EN 1242:2013-05.

In a third embodiment the invention relates to a process according to embodiment 1 or 2, characterized in that the organic polyisocyanate of component a) is selected from the group comprising or consisting of aliphatic, cycloaliphatic, aromatic and heterocyclic polyisocyanates or mixtures thereof, especially 2,4-diisocyanatotoluene, 2,6-diisocyanatotoluene, 2,2'-diisocyanatodiphenylmethane, 2,4'-diisocyanatodiphenylmethane, 4,4'-diisocyanatodiphenylmethane and poly(methylenephenyl isocyanate) or mixtures thereof.

In a fourth embodiment the invention relates to a process according to any of the preceding embodiments, characterized in that component b) has a pH of ≥ 8.0 to ≤ 10.0, preferably 8.2 to ≤ 9.8, more preferably of ≥ 8.2 to ≤ 9.6, determined via DIN EN ISO 19396-1:2020-05; a water content of ≥ 0.01 to ≤ 0.25 wt%, preferably of ≥ 0.02 to ≤ 0.20 wt%, more preferably of ≥ 0.05 to ≤ 0.18 wt%, determined via DIN 51777:2020-04; and/or a total base content of ≥ 250 ppm to ≤ 500 ppm, preferably of ≥ 300 ppm to ≤ 450 ppm, determined via the method set out in the description.

In a fifth embodiment the invention relates to a process according to any of the preceding embodiments, characterized in that component b) before the reaction is dried under reduced pressure at elevated temperatures, preferably for 2 to 4 hours at 100 to 150°C and 5 to 50 mbar.

In a sixth embodiment the invention relates to a process according to any of the preceding embodiments, characterized in that the reaction products contained in component b) comprise or consist of a polyurea and/or a polyhydrazodicarbonamide in a fraction of preferably 2.0 to 25.0 wt%, more preferably 5.0 to 23.0 wt%, based on the mass of the isocyanate-terminated prepolymer.

In a seventh embodiment the invention relates to a process according to any of the preceding embodiments, characterized in that component b) has a solids content of 2.0 to 40.0 wt%.

In an eighth embodiment the invention relates to a process according to any of the preceding embodiments, characterized in that the organic polyisocyanate i) is selected from the group comprising or consisting of hexamethylene 1,6-diisocyanate, pentamethylene 1,5-diisocyanate, 2,4-diisocyanatotoluene, 2,6-diisocyanatotoluene, 3,3,5-trimethyl-5-isocyanatomethylcyclohexyl isocyanate, diphenylmethane 2,2'-diisocyanate, diphenylmethane 2,4'-diisocyanate, diphenylmethane 4,4'-diisocyanate or mixtures thereof, preferably 2,4-diisocyanatotoluene, 2,6-diisocyanatotoluene or mixtures thereof, more preferably a mixture of 2,4-diisocyanatotoluene and 2,6-diisocyanatotoluene in a ratio of 80:20.

In a ninth embodiment the invention relates to a process according to any of the preceding embodiments, characterized in that

- the polyamine containing primary and/or secondary amino groups of component ii) is selected from the group comprising or consisting of aliphatic, araliphatic, cycloaliphatic or aromatic amines and also mixtures thereof, especially ethylenediamine, hexamethylenediamines, trimethyldiaminohexanes, N,N'-dimethyleneethylenediamine, diethylenetriamine, propylenediamine, dipropylenetriamine, piperazine, triazine, 4-aminobenzylamine, 4,4'-diaminodicyclohexylmethane, 1,4-diaminocyclohexane, phenylenediamines, toluenediamines, bisaminomethylbenzenes or mixtures thereof;

- the hydrazine of component ii) is selected from the group comprising or consisting of hydrazine hydrate and N,N-dialkylhydrazines or mixtures thereof; and/or

- the hydrazide of component ii) is selected from the group comprising or consisting of hydrazides of monocarboxylic acids, hydrazides of metals or mixtures thereof.

In a tenth embodiment the invention relates to a process according to any of the preceding embodiments, characterized in that the polyether iii) is selected from the group comprising or consisting of products of polyaddition of propylene oxide and/or ethylene oxide onto bi- and/or tri-functional starters, where the starter preferably comprises or consists of water, 1,2-propylene glycol, trimethylolpropane, glycerol, pentaerythritol or mixtures thereof.

In an eleventh embodiment the invention relates to a process according to any of the preceding embodiments, characterized in that the polyether iii) comprises or consists of a polyalkoxyalkylene-polyol, where this polyalkoxyalkylene-polyol preferably comprises or consists of a polyoxypropylene-polyoxyethylene-polyol which preferably has an ethoxyethylene group content of 0 to 30.0 wt%, more preferably of 5.0 to 25.0 wt% and/or a hydroxyl number of 20 to 56 mg KOH/g.

In a twelfth embodiment the invention relates to a process according to any of the preceding embodiments, characterized in that component b) comprises reaction products of 16.9 parts by weight of a mixture of 2,4- and 2,6-diisocyanatotoluene i) in a ratio of 80:20 with 4.85 parts by weight of hydrazine hydrate ii) in 80 parts by weight of a polyether iii) having a functionality greater than 2, with the polyether iii) preferably being or comprising a polyalkoxyalkylene polyol.

In a thirteenth embodiment the invention relates to a process according to any of the preceding embodiments, characterized in that the composition comprises

- 25.0 to 80.0 wt%, preferably 35.0 to 70.0 wt% of component a);

- 20.0 to 75.0 wt%, preferably 25.0 to 65.0 wt% of component b); and

- 0 to 5.0 wt%, preferably 0.05 to 2.0 wt% of component c);

based on 100 wt% arising from the sum total of components a) to c).

In a fourteenth embodiment the invention relates to an isocyanate-terminated prepolymer obtained or obtainable by a process according to any of embodiments 1 to 13.

In a fifteenth embodiment the invention relates to an isocyanate-terminated prepolymer according to embodiment 14, characterized in that this prepolymer, after storage over a period of 3 days at 80°C under dry nitrogen, exhibits

- a viscosity change of at most 3000 mPas, preferably of at most 2000 mPas, more preferably of 100 mPas to 1000 mPas, very preferably of at most 500 mPas, determined via a rheometer at 25°C to DIN 53019:2008-09; and/or

- a reduction in isocyanate content of at most 0.5 wt%, preferably of 0.1 wt% to 0.4 wt%, based on the total weight of the isocyanate-terminated prepolymer and determined to DIN EN 1242:2013-05.

In a sixteenth embodiment the invention relates to an isocyanate-terminated prepolymer according to embodiment 14 or 15, characterized in that this prepolymer has a film-forming time 120 min, preferably of ≥ 130 min to ≤ 240 min, determined via drying time recorder to ASTM D 5895:2003-05 at a prepolymer layer thickness of 150 μm at 24°C and 45% relative humidity.

In a seventeenth embodiment the invention relates to the use of an isocyanate-terminated prepolymer according to any of embodiments 14 to 16 as or in adhesive(s), especially wood adhesive(s).

In an eighteenth embodiment the invention relates to a composite element composed of at least two wooden parts joined to one another using an isocyanate-terminated prepolymer according to any of embodiments 14 to 16 as or in an adhesive.

In a nineteenth embodiment the invention relates to the use of an organic polyhydroxyl compound in the form of a dispersion defined as in any of embodiments 1 and 4 to 13 as a component in the preparation of isocyanate-terminated prepolymers, especially of isocyanate-terminated prepolymers according to any of embodiments 14 to 16, for increasing the storage stability and/or extending the film-forming time of these isocyanate-terminated prepolymers.

**Inventive and comparative examples:**

In what follows the present invention is elucidated with reference to examples but is in no way limited thereto.

Components used:

- Acetic acid: Glacial acetic acid p.a.

- Standard perchloric acid solution c1: Standard perchloric acid solution in acetic acid, $c1(HClO_4) = 0.1$ mol/l with titre t

- Standard perchloric acid solution c2: Standard perchloric acid solution in acetic acid, $c2(HClO_4) = 0.01$ mol/l with titre t

- Iso-I: Desmodur LS 2424 (Covestro Deutschland AG) (monomeric MDI): Mixture of 54 wt% 2,4'-MDI and 46 wt% 4,4'-MDI.

- Iso-II: Desmodur VKS 20 F (Covestro Deutschland AG) (polymeric MDI) with an NCO content of 31.6% and a polymer fraction of around 50 wt%.

- Polyol Ia: Baycoll BT 5028 (Covestro Deutschland AG): Polypropylene ether polyol having an OH number of 28 mg KOH/g. The polyether polyol contains 20 wt% of a reaction product of toluene diisocyanate and hydrazine hydrate in the form of a finely divided, sedimentation-stable dispersion in a trifunctional polyether of OH number 35, which thus has a number-average molecular weight of 4800 g/mol.

- Polyol Ib: This is Polyol Ia which has been dried for 3 hours at 120 °C and 15 mbar under an oil pump vacuum with stirring.

- Polyol Ic: This is Polyol Ia which has been dried for 3 hours at 120 °C and 5 mbar under an oil pump vacuum with stirring.

Polyols Ia, Ib and Ic and their properties (determined as described later on below in the section "Measurement methods used") are portrayed in Table 1 below:

**Table 1**

| Properties | Polyol Ia | Polyol Ib | Polyol Ic |
|---|---|---|---|
| pH | 7.9 | 8.4 | 8.6 |
| Water content | 0.552 | 0.152 | 0.076 |
| Total base content | 199.6 | 372.3 | 351.6 |

Measurement methods used:

- Total base content:
  A 250 ml flask is charged accurately with 30 g of the sample and 100 ml of acetic acid. If the anticipated total base content is more than 300 mg KOH/kg, titration is performed with standard perchloric acid solution c1; if less, with standard perchloric acid solution c2. A pH meter determines the equivalence point during the titration via the potential difference and so determines the volume V of standard solution consumed. The total base content R is determined via the formula below:

$$R = ((V-V0)*56.1*c(HClO_4)*t*1000)/w$$

V0: Volume of standard solution consumed for titration of the blank value

56.1: Molar mass of KOH in g/mol

$c(HClO_4)$: nominal amount-of-substance concentration of the standard solution, in mol/l

t: Titre of the standard solution

1000: Conversion factor for g to kg

w: Initial mass of sample in g

- OH number:
  The OH number was determined to DIN 53240-2 (09-2008).

- NCO content:
  The NCO content was determined to DIN EN 1242:2013-05.

- Viscosity:
  The dynamic viscosity was determined to DIN 53019-1:2008-09.

- Water content:
  The water content was determined to DIN 51777:2020-04 (04-2020).

- pH:
  The pH was determined to DIN EN ISO 19396:2020-05. This was done by diluting 5 g of the sample in 100 ml of methanol/water mixture at 1:1 parts by weight. The methanol/water solvent mixture was adjusted beforehand to a pH of 7.

- Storage stability:
  The prepolymer sample was stored for three days at 80°C in an aluminium canister under nitrogen blanketing. The NCO content and the viscosity were determined before and after storage.

- Drying time recorder (film-forming time/film drying time):
  The film-forming time and the film drying time were determined to ASTM D 5895 (05-2003). The measuring apparatus used was as described in Section 9.1. The prepolymers were applied via an applicator block with 150 μm nominal thickness to a glass plate degreased using acetone, and conveyed directly into the measuring apparatus. After 24 h, determinations were made as described in ASTM D 5895 of the film-forming time (Stage I in the standard) and the film drying time (Stage IV).

General preparation protocol for the prepolymers:

A flask is charged with Iso-I and Iso-II under nitrogen blanketing and heated to 80°C. Then Polyol Ia, Polyol Ib or Polyol Ic is added slowly, so that the temperature due to the exothermic reaction does not climb above 85°C. Then the mixture is stirred for 2 hours, with testing every 30 minutes for a constant NCO content. The initial masses and results (properties were measured as described earlier on above in the section "Measurement methods used") are summarized in Table 2 below:

**Table 2**

| Components, measurements | Compound | Unit | A (non- invention) | B (invention) | C (invention) |
|---|---|---|---|---|---|
| Component b) | Polyol Ia | parts by wt. | 51.44 | | |
| | Polyol Ib | parts by wt. | | 51.44 | |
| | Polyol Ic | parts by wt. | | | 51.44 |
| Component a) | Iso I | parts by wt. | 28.17 | 28.17 | 28.17 |
| | Iso II | parts by wt. | 20.39 | 20.39 | 20.39 |
| NCO content* | | % by weight | 13.59 | 14.50 | 14.72 |
| Viscosity at 25°C | | mPas | 6230 | 2960 | 2680 |
| **Drying time recorder** | | | | | |
| Temperature | | °C | 24 | 24 | 24 |
| Relative humidity | | %rh | 45 | 45 | 45 |
| Film-forming time | | hh:mm | 2:00 | 2:20 | 2:40 |
| Film drying time | | hh:mm | 14:30 | 14:00 | 15:50 |
| **Prepolymer storage stability** | | **1** | | | |
| NCO content before storage | | % by weight | 13.59 | 14.50 | 14.72 |
| NCO content after storage | | % by weight | 12.90 | 14.18 | 14.49 |
| NCO content change (abs.) | | % by weight | -0.69 | -0.32 | -0.23 |
| Viscosity at 25°C | | mPas | 6230.00 | 2960.00 | 2680.00 |
| Viscosity (at 25°C) after storage | | mPas | 10800.00 | 3610.00 | 3080.00 |
| Viscosity change (abs.) | | mPas | 4570.00 | 650.00 | 400.00 |
| *This NCO content was determined 24 hours after the end of reaction. | | | | | |

Discussion:

Comparing the increase in viscosity during storage for three days at 80°C under nitrogen blanketing (storage stability) of prepolymer A (non-invention) with B and C (invention), it is ascertained that the viscosity increase for the non-invention prepolymer A is more than seven times higher than for the invention prepolymer B and more than eleven times higher than for the invention prepolymer C. Additionally the drop in NCO for the non-invention prepolymer A is more than twice as high as for the prepolymers B and C. Accordingly the storage stability and thus the maximum storage life of the invention prepolymers B and also C are very much longer and thus better than those of the non-invention prepolymer A.

The non-invention prepolymer A likewise has a much shorter film-forming time than the invention prepolymers B and C. This film-forming time correlates with the open time or in other words with the processing life of adhesive formulations. This means that the processing life of the invention prepolymers B and C is longer by 20 min and 40 min, respectively, than that of the non-invention prepolymer A.

Therefore the invention prepolymers B and C in comparison to the non-invention prepolymer A have very advantageous properties.

**Claims**

**1.**   Process for preparing an isocyanate-terminated prepolymer, particularly for use as or in adhesives, having an isocyanate content of 8.0 to 20.0 wt%, determined to DIN EN 1242:2013-05, by reacting a composition comprising or consisting of components

a) at least one organic polyisocyanate;
b) at least one organic polyhydroxyl compound in the form of a dispersion which comprises or consists of reaction products of

i) at least one organic polyisocyanate with
ii) at least one polyamine containing primary and/or secondary amino groups, hydrazine and/or hydrazide in a
iii) polyether containing at least two hydroxyl groups and having a molecular weight range from 500 to 12 000 g/mol;

and also
c) optionally auxiliaries and adjuvants,
**characterized in that**

component b) has a pH of ≥ 8.0, determined via DIN EN ISO 19396-1:2020-05, a water content of ≤ 0.20 wt%, based on the total weight of component b) and determined via DIN 51777:2020-04, and a total base content of ≥ 200 ppm, determined via the method set out in the description.

2. Process according to Claim 1, **characterized in that** the isocyanate-terminated prepolymer has a dynamic viscosity of ≥ 1000 to ≤ 5000 mPas, preferably of ≥ 1000 to ≤ 4000 mPas, more preferably of ≥ 1000 to ≤ 3000 mPas, determined via a rheometer to DIN 53019:2008-09 and/or an isocyanate content of 8 wt% to 20 wt%, preferably of 10 to 18 wt%, more preferably of 12 to 18 wt%, determined via DIN EN 1242:2013-05.

3. Process according to Claim 1 or 2, **characterized in that** the organic polyisocyanate of component a) is selected from the group comprising or consisting of aliphatic, cycloaliphatic, aromatic and heterocyclic polyisocyanates or mixtures thereof, especially 2,4-diisocyanatotoluene, 2,6-diisocyanatotoluene, 2,2'-diisocyanatodiphenylmethane, 2,4'-diisocyanatodiphenylmethane, 4,4'-diisocyanatodiphenylmethane and poly(methylenephenyl isocyanate) or mixtures thereof.

4. Process according to any of the preceding claims, **characterized in that** component b) has a pH of ≥ 8.0 to ≤ 10.0, preferably of ≥ 8.2 to ≤ 9.8, more preferably of ≥ 8.2 to ≤ 9.6, determined via DIN EN ISO 19396-1:2020-05; a water content of ≥ 0.01 to ≤ 0.25 wt%, preferably of ≥ 0.02 to ≤ 0.20 wt%, more preferably of ≥ 0.05 to ≤ 0.18 wt%, determined via DIN 51777:2020-04; and/or a total base content of ≥ 250 ppm to ≤ 500 ppm, preferably of ≥ 300 ppm to ≤ 450 ppm, determined via the method set out in the description.

5. Process according to any of the preceding claims, **characterized in that** component b) before the reaction is dried under reduced pressure at elevated temperatures, preferably for 2 to 4 hours at 100 to 150°C and 5 to 50 mbar.

6. Process according to any of the preceding claims, **characterized in that** the organic polyisocyanate i) is selected from the group comprising or consisting of hexamethylene 1,6-diisocyanate, pentamethylene 1,5-diisocyanate, 2,4-diisocyanatotoluene, 2,6-diisocyanatotoluene, 3,3,5-trimethyl-5-isocyanatomethylcyclohexyl isocyanate, diphenylmethane 2,2'-diisocyanate, diphenylmethane 2,4'-diisocyanate, diphenylmethane 4,4'-diisocyanate or mixtures thereof, preferably 2,4-diisocyanatotoluene, 2,6-diisocyanatotoluene or mixtures thereof, more preferably a mixture of 2,4-diisocyanatotoluene and 2,6-diisocyanatotoluene in a ratio of 80:20.

7. Process according to any of the preceding claims, **characterized in that**

• the polyamine containing primary and/or secondary amino groups of component ii) is selected from the group comprising or consisting of aliphatic, araliphatic, cycloaliphatic or aromatic amines and also mixtures thereof, especially ethylenediamine, hexamethylenediamines, trimethyldiaminohexanes, N,N'-dimethyleneethylenediamine, diethylenetriamine, propylenediamine, dipropylenetriamine, piperazine, triazine, 4-aminobenzylamine, 4,4'-diaminodicyclohexylmethane, 1,4-diaminocyclohexane, phenylenediamines, toluenediamines, bisaminomethylbenzenes or mixtures thereof;
• the hydrazine of component ii) is selected from the group comprising or consisting of hydrazine hydrate and N,N-dialkylhydrazines or mixtures thereof; and/or
• the hydrazide of component ii) is selected from the group comprising or consisting of hydrazides of monocarboxylic acids, hydrazides of metals or mixtures thereof.

8. Process according to any of the preceding claims, **characterized in that** the polyether iii) is selected from the group comprising or consisting of products of polyaddition of propylene oxide and/or ethylene oxide onto bi- and/or trifunctional starters, where the starter preferably comprises or consists of water, 1,2-propylene glycol, trimethylolpropane, glycerol, pentaerythritol or mixtures thereof and/or the polyether iii) comprises or consists of a polyalkoxyalkylene-polyol, where this polyalkoxyalkylene-polyol preferably comprises or consists of a polyoxypropylene-polyoxyethylene-polyol which preferably has an ethoxyethylene group content of 0 to 30.0 wt%, more preferably of 5.0 to 25.0 wt% and/or a hydroxyl number of 20 to 56 mg KOH/g.

9. Process according to any of the preceding claims, **characterized in that** the composition comprises

   • 25.0 to 80.0 wt%, preferably 35.0 to 70.0 wt% of component a);
   • 20.0 to 75.0 wt%, preferably 25.0 to 65.0 wt% of component b); and
   • 0 to 5.0 wt%, preferably 0.05 to 2.0 wt% of component c);

   based on 100 wt% arising from the sum total of components a) to c).

10. Isocyanate-terminated prepolymer obtained or obtainable by a process according to any of Claims 1 to 9.

11. Isocyanate-terminated prepolymer according to Claim 10, **characterized in that** this prepolymer, after storage over a period of 3 days at 80°C under dry nitrogen, exhibits

   • a viscosity change of at most 3000 mPas, preferably of at most 2000 mPas, more preferably of 100 mPas to 1000 mPas, very preferably of at most 500 mPas, determined via a rheometer at 25°C to DIN 53019:2008-09; and/or
   • a reduction in isocyanate content of at most 0.5 wt%, preferably of 0.1 wt% to 0.4 wt%, based on the total weight of the isocyanate-terminated prepolymer and determined to DIN EN 1242:2013-05.

12. Isocyanate-terminated prepolymer according to Claim 10 or 11, **characterized in that** this prepolymer has a film-forming time of > 120 min, preferably of $\geq$ 130 min to $\leq$ 240 min, determined via drying time recorder to ASTM D 5895:2003-05 at a prepolymer layer thickness of 150 $\mu$m at 24°C and 45% relative humidity.

13. Use of an isocyanate-terminated prepolymer according to any of Claims 10 to 12 as or in adhesive(s), especially wood adhesive(s).

14. Composite element composed of at least two wooden parts joined to one another using an isocyanate-terminated prepolymer according to any of Claims 10 to 12 as or in an adhesive.

15. Use of an organic polyhydroxyl compound in the form of a dispersion defined as in any of Claims 1 and 4 to 9 as a component in the preparation of isocyanate-terminated prepolymers, especially of isocyanate-terminated prepolymers according to any of Claims 10 to 12, for increasing the storage stability and/or extending the film-forming time of these isocyanate-terminated prepolymers.

Europäisches
Patentamt

European
Patent Office

Office européen
des brevets

# EUROPEAN SEARCH REPORT

Application Number

EP 23 16 1036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/117260 A1 (MECKEL WALTER [DE]) 29 August 2002 (2002-08-29) * pages 3-5, par. 0048, 0050-0054, ex. 1, claims 1-14 * ----- | 1-15 | INV. C08G18/08 C08G18/10 C08G18/32 C08G18/40 C08G18/48 C08G18/76 C09J175/04 C09J175/08 C09J175/12 |
| X | US 4 118 376 A (PEDAIN JOSEF ET AL) 3 October 1978 (1978-10-03) * col. 6, lines 60-68; col. 7, ex. 1; col. 12, claim 6 * ----- | 1,3-8, 10-15 | |

**TECHNICAL FIELDS SEARCHED (IPC)**

C08G
C09J

The present search report has been drawn up for all claims

| Place of search | Date of completion of the search | Examiner |
|---|---|---|
| Munich | 11 July 2023 | Stefaniu, Cristina |

EPO FORM 1503 03.82 (P04C01)

## ANNEX TO THE EUROPEAN SEARCH REPORT
## ON EUROPEAN PATENT APPLICATION NO.

EP 23 16 1036

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2023

| Patent document cited in search report | | Publication date | Patent family member(s) | | Publication date |
|---|---|---|---|---|---|
| US 2002117260 | A1 | 29-08-2002 | AT | 502064 T | 15-04-2011 |
| | | | AU | 2797902 A | 24-06-2002 |
| | | | CA | 2431396 A1 | 20-06-2002 |
| | | | DE | 10062415 A1 | 20-06-2002 |
| | | | EP | 1343832 A1 | 17-09-2003 |
| | | | ES | 2361978 T3 | 24-06-2011 |
| | | | JP | 4272427 B2 | 03-06-2009 |
| | | | JP | 2004521970 A | 22-07-2004 |
| | | | US | 2002117260 A1 | 29-08-2002 |
| | | | WO | 0248232 A1 | 20-06-2002 |
| US 4118376 | A | 03-10-1978 | AU | 512455 B2 | 09-10-1980 |
| | | | BE | 856893 A | 18-01-1978 |
| | | | DE | 2632513 A1 | 26-01-1978 |
| | | | ES | 460847 A1 | 16-04-1978 |
| | | | FR | 2359161 A1 | 17-02-1978 |
| | | | GB | 1550766 A | 22-08-1979 |
| | | | IT | 1079789 B | 13-05-1985 |
| | | | JP | S5312989 A | 06-02-1978 |
| | | | JP | S5535407 B2 | 13-09-1980 |
| | | | NL | 7708087 A | 24-01-1978 |
| | | | US | 4118376 A | 03-10-1978 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0879270 A
- DE 2513815 A
- DE 2719720 A
- EP 1343832 B1

**Non-patent literature cited in the description**

- *Adhäsion - kleben & dichten,* 1997, vol. 41 (1-2,97), 37-38